(19) Europäisches Patentamt
European Patent Office
Office européen des brevets

(11) **EP 4 401 160 A1**

(12) **EUROPEAN PATENT APPLICATION**

(43) Date of publication:
**17.07.2024 Bulletin 2024/29**

(21) Application number: **23218585.0**

(22) Date of filing: **20.12.2023**

(51) International Patent Classification (IPC):
*H01M 4/04* (2006.01)    *H01M 4/66* (2006.01)
*H01M 10/04* (2006.01)    *H01M 10/0585* (2010.01)
*H01M 50/46* (2021.01)    *H01M 10/052* (2010.01)
*H01M 4/02* (2006.01)

(52) Cooperative Patent Classification (CPC):
**H01M 4/0404; H01M 4/0409; H01M 4/667;
H01M 4/668; H01M 10/0418; H01M 10/044;
H01M 10/0585; H01M 50/46;** H01M 10/052;
H01M 2004/029

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.01.2023 JP 2023002286**

(71) Applicant: **TOYOTA JIDOSHA KABUSHIKI
KAISHA**
**Toyota-shi, Aichi-ken, 471-8571 (JP)**

(72) Inventors:
• **KINTSU, Yusuke**
  **Toyota-shi, 471-8571 (JP)**
• **NAKANO, Takahiko**
  **Toyota-shi, 471-8571 (JP)**

(74) Representative: **D Young & Co LLP**
**3 Noble Street**
**London EC2V 7BQ (GB)**

(54) **BATTERY COMPONENT, BIPOLAR BATTERY, AND METHOD OF PRODUCING BATTERY COMPONENT**

(57)    A battery component comprises: a first component; an adhesive layer; and a second component, in this order, wherein the adhesive layer includes an adhesive agent, a conductive aid, and porous particles, and the adhesive agent includes a main agent and a curing agent.

FIG.1
10

**Description**

CROSS REFERENCE TO RELATED APPLICATIONS

This nonprovisional application is based on Japanese Patent Application No. 2023-002286 filed on January 11, 2023, with the Japan Patent Office, the entire contents of which are hereby incorporated by reference.

BACKGROUND OF THE DISCLOSURE

Field

The present disclosure relates to a battery component, a bipolar battery, and a method of producing a battery component.

Description of the Background Art

Japanese Patent Laying-Open No. 2019-034466 discloses a stack of gas barrier films that are stacked on top of one another with an adhesive agent interposed therebetween in order to prevent foaming that can occur at the time of curing of the adhesive agent.

SUMMARY OF THE DISCLOSURE

For providing excellent secondary batteries, secondary battery components (battery components) have been researched. Those research efforts include developing a technique intended for bonding different battery components to one another with an adhesive layer interposed therebetween.
However, due to air bubble formation in the adhesive layer at the time of bonding, adhesion force may be impaired, among others. As a result, battery components may peel off.
An object of the present disclosure is to reduce peeling-off of battery components.

[1] A battery component comprising:

a first component;
an adhesive layer; and
a second component, in this order, wherein
the adhesive layer includes an adhesive agent, a conductive aid, and porous particles, and
the adhesive agent includes a main agent and a curing agent.
Air bubbles that can be formed in the adhesive layer are attributed to gas such as carbon dioxide and/or moisture.
Therefore, by having the gas and/or moisture adsorbed on the porous particles, formation of air bubbles can be reduced and thereby peeling-off of the battery components can also be reduced.

[2] The battery component according to [1], wherein

the main agent is a resin having a carboxyl group, and
the curing agent is a resin having an isocyanate group or an amino group.

[3] The battery component according to [1] or [2], wherein the battery component includes the curing agent in an amount from 5.0 parts by mass to 10 parts by mass, the conductive aid in an amount from 0.1 parts by mass to 1.0 part by mass, and the porous particles in an amount from 90 parts by mass to 200 parts by mass, relative to 100 parts by mass of the main agent.
[4] The battery component according to any one of [1] to [3], wherein each of the first component and the second component is a current collector.
[5] A bipolar battery comprising the battery component according to [4].
[6] A method of producing a battery component, comprising:

preparing a slurry by mixing a main agent, a curing agent, a conductive aid, porous particles, and a solvent;
applying the slurry to a first component;
forming an adhesive layer by drying the slurry applied to the first component; and
placing a second component on the adhesive layer, wherein

the first component and the second component are stacked on top of one another with the adhesive layer interposed therebetween.

The foregoing and other objects, features, aspects and advantages of the present disclosure will become more apparent from the following detailed description of the present disclosure when taken in conjunction with the accompanying drawings.

BRIEF DESCRIPTION OF THE DRAWINGS

Fig. 1 is a cross-sectional schematic view illustrating an example of a battery component according to the present embodiment.
Fig. 2 is a flowchart schematically illustrating a method of producing a battery component according to the present embodiment.
Fig. 3 is a conceptual view illustrating an example of a production apparatus used for producing a battery component according to the present embodiment.
Fig. 4 is a conceptual view illustrating an example of a lithium-ion secondary battery according to the present embodiment.
Fig. 5 is a table showing a first battery configuration.
Fig. 6 is a table showing a second battery configuration.
Fig. 7 is a table showing a third battery configuration.
Fig. 8 is a conceptual view illustrating an example of a bipolar battery according to the present embodiment.
Fig. 9 is a photograph showing the appearance of a battery component of Example 1 after heating.
Fig. 10 is a photograph showing the appearance of a battery component of Comparative Example 1 after heating.

DESCRIPTION OF THE PREFERRED EMBODIMENTS

Next, an embodiment of the present disclosure (which may also be simply called "the present embodiment" hereinafter) and an example of the present disclosure (which may also be simply called "the present example" hereinafter) will be described. It should be noted that neither the present embodiment nor the present example limits the technical scope of the present disclosure.

A stoichiometric composition formula represents a typical example of a compound. A compound may have a non-stoichiometric composition. For example, "$Al_2O_3$" is not limited to a compound where the ratio of the amount of substance (molar ratio) is "Al/O=2/3". "$Al_2O_3$" represents a compound that includes Al and O in any composition ratio, unless otherwise specified. Further, the compound may be doped with a trace element, or some of Al and/or O may be replaced by another element, for example.

"Derivative" refers to a compound that is derived from its original compound by at least one partial modification selected from the group consisting of functional group introduction, atom replacement, oxidation, reduction, and other chemical reactions. The position of modification may be one position, or may be a plurality of positions. "Substituent" may include, for example, at least one selected from the group consisting of alkyl group, alkenyl group, alkynyl group, cycloalkyl group, unsaturated cycloalkyl group, aromatic group, heterocyclic group, halogen atom (F, Cl, Br, I, etc.), OH group, SH group, CN group, SCN group, OCN group, nitro group, alkoxy group, unsaturated alkoxy group, amino group, alkylamino group, dialkylamino group, aryloxy group, acyl group, alkoxycarbonyl group, acyloxy group, aryloxycarbonyl group, acylamino group, alkoxycarbonylamino group, aryloxy carbonylamino group, sulfonylamino group, sulfamoyl group, carbamoyl group, alkylthio group, arylthio group, sulfonyl group, sulfinyl group, ureido group, phosphoramide group, sulfo group, carboxy group, hydroxamic acid group, sulfino group, hydrazino group, imino group, silyl group, and the like. These substituents may be further substituted. When there are two or more substituents, these substituents may be the same as one another or may be different from each other. A plurality of substituents may be bonded together to form a ring.

"Copolymer" includes at least one selected from the group consisting of unspecified-type, statistical-type, random-type, alternating-type, periodic-type, block-type, and graft-type.

<<Battery Component>>

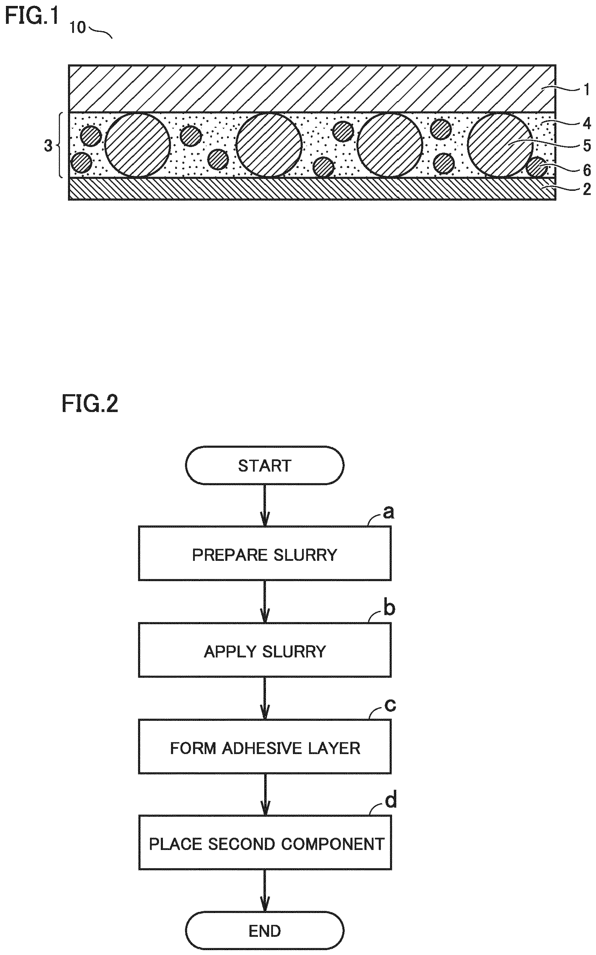

Fig. 1 is a cross-sectional schematic view illustrating an example of a battery component according to the present embodiment. As illustrated in Fig. 1, a battery component 10 comprises a first component 1, an adhesive layer 3, and a second component 2 in this order.

Adhesive layer 3 may be formed in contact with the entirety of a side of first component 1 facing adhesive layer 3 and a side of second component 2 facing adhesive layer 3, or may be formed in contact with at least part of a side of first component 1 facing adhesive layer 3 and a side of second component 2 facing adhesive layer 3. From the viewpoint of peel strength of battery component 10, it is preferable that adhesive layer 3 be formed in contact with the entirety of a side of first component 1 facing adhesive layer 3 and a side of second component 2 facing adhesive layer 3.

Battery component 10 may comprise a plurality of adhesive layers 3. For example, battery component 10 may include adhesive layer 3, first component 1, adhesive layer 3, and second component 2 in this order, or may include first component 1, adhesive layer 3, second component 2, and adhesive layer 3 in this order, or may include adhesive layer 3, first component 1, adhesive layer 3, second component 2, and adhesive layer 3 in this order.

<Adhesive Layer>

Adhesive layer 3 includes an adhesive agent 4, a conductive aid 5, and porous particles 6. Adhesive agent 4 includes a main agent and a curing agent.

<<Main Agent>>

From the viewpoint of good formability, as the main agent, a thermoplastic resin is preferably used. From the viewpoint of resistance against electrolyte solution, the main agent is preferably a resin having a carboxyl group. Examples of the resin having a carboxyl group include polyester resins having a carboxyl group, polyamide resins having a carboxyl group, polyurethane resins having a carboxyl group, acrylic resins having a carboxyl group, polyolefin resins having a carboxyl group, and the like. Only one type of these aqueous resins having a carboxyl group may be used by itself, or two or more types may be used in combination. Among these, from the viewpoint of resistance against electrolyte solution, polyolefin resins having a carboxyl group are more preferable.

<<Curing Agent>>

The curing agent is a material that is mixed with the main agent to cure the main agent. From the viewpoint of resistance against electrolyte solution, the curing agent is preferably a resin having an isocyanate group or an amino group. Examples of the resin having an isocyanate group (which may also be called "an isocyanate-based resin" hereinafter) include aromatic polyisocyanates, aliphatic polyisocyanates, alicyclic polyisocyanates, and aromatic aliphatic polyisocyanates, each having two or more isocyanate groups. Examples of the resin having an amino group (which may also be called "an amine-based resin" hereinafter) include aliphatic amines, alicyclic amines, modified aliphatic polyamines, modified alicyclic amines, polyamidoamines, and the like. Among these, from the viewpoints of resistance against electrolyte solution and easy control of curing reaction, aliphatic polyisocyanates are more preferable.

The content of the curing agent is preferably from 5.0 to 10 parts by mass, more preferably from 7.0 to 10 parts by mass, relative to 100 parts by mass of the main agent. With the content of the curing agent being from 5.0 to 10 parts by mass, curing of the resin in crosslink reaction is facilitated.

<<Conductive Aid>>

Conductive aid 5 may form an electron conduction path between first component 1 and second component 2. Conductive aid 5 may include any component. Conductive aid 5 may include, for example, at least one selected from the group consisting of Ni-plated particles, acetylene black (AB), Ketjenblack (registered trademark), vapor grown carbon fibers (VGCFs), carbon nanotubes (CNTs), and graphene flakes (GFs). Among these, from the viewpoints of achieving both the electrical conductivity and the peel strength, Ni-plated particles are preferable.

The content of conductive aid 5 is preferably from 0.1 to 1.0 part by mass, more preferably from 0.2 to 0.7 parts by mass, relative to 100 parts by mass of the main agent. With the content of conductive aid 5 being from 0.1 to 1.0 part by mass, it is possible to achieve both the electrical conductivity and the peel strength.

<<Porous Particles>>

Porous particles 6 adsorb air bubbles that are formed in adhesive layer 3 attributable to gas such as carbon dioxide and/or moisture. Therefore, with adhesive layer 3 including porous particles 6, formation of air bubbles and peeling-off between first component 1 and second component 2 can be reduced.

Porous particles 6 are not particularly limited provided that they are capable of adsorbing air bubbles, and examples thereof include zeolite, silica, talc, kaolinite, feldspar, and the like. Among these, from the viewpoint of the amount of gas adsorption, zeolite is preferable.

The content of porous particles 6 is preferably from 90 to 200 parts by mass, more preferably from 90 to 120 parts by mass, relative to 100 parts by mass of the main agent. With the content of porous particles 6 being from 90 to 200 parts by mass, it is possible to reduce expansion that can be caused by gas adsorption, and it is also possible to reduce a decrease in peel strength that can occur in association with specific surface area due to gas adsorption.

<First Component, Second Component>

In the present embodiment, examples of first component 1 and second component 2 include a positive electrode current collector, a positive electrode active material layer, a negative electrode current collector, a negative electrode active material layer, and the like. First component 1 and second component 2 are different components. More specifically, when first component 1 is a positive electrode current collector, second component 2 is either a positive electrode active material layer or a negative electrode current collector. When first component 1 is a positive electrode active material layer, second component 2 is a positive electrode current collector. When first component 1 is a negative electrode current collector, second component 2 is either a positive electrode current collector or a negative electrode active material layer. When first component 1 is a negative electrode active material layer, second component 2 is a negative electrode current collector. When at least one of first component 1 and second component 2 is a positive electrode current collector and the other is a positive electrode active material layer, battery component 10 is a positive electrode. When at least one of first component 1 and second component 2 is a negative electrode current collector and the other is a negative electrode active material layer, battery component 10 is a negative electrode. When at least one of first component 1 and second component 2 is a positive electrode current collector and the other is a negative electrode current collector, battery component 10 may configure a bipolar electrode. The above examples are merely illustrative and not restrictive.

<<Positive Electrode Current Collector>>

The positive electrode current collector is electrically conductive. The positive electrode current collector may have a thickness from 5 to 50 $\mu$m, for example. The positive electrode current collector may include a metal foil, for example. The positive electrode current collector may include at least one selected from the group consisting of Al, Mn, Ti, Fe, and Cr, for example. The positive electrode current collector may include an Al foil, an Al alloy foil, a Ti foil, a stainless steel (SUS) foil, and/or the like, for example.

<<Positive Electrode Active Material Layer>>

The positive electrode active material layer may have a thickness from 10 to 1000 $\mu$m, or from 50 to 500 $\mu$m, or from 100 to 300 $\mu$m, for example. The positive electrode active material layer includes a positive electrode active material. The positive electrode active material layer may further include a conductive material, a binder, and the like, for example.

<Conductive Material>

The conductive material may form an electron conduction path inside the positive electrode active material layer. The content of the conductive material may be, for example, from 0.1 to 10 parts by mass relative to 100 parts by mass of the positive electrode active material. The conductive material may include any component. The conductive material may include, for example, at least one selected from the group consisting of graphite, AB, Ketjenblack, VGCFs, CNTs, and GFs.

<Binder>

The content of the binder may be, for example, from 0.1 to 10 parts by mass relative to 100 parts by mass of the positive electrode active material. The binder may include any component. The binder may include, for example, at least one selected from the group consisting of PVdF, vinylidene difluoride-hexafluoropropylene copolymer (PVdF-HFP), PTFE, CMC, PAA, PVA, PVP, polyoxyethylene alkyl ether, and derivatives of these.

<Other Components>

The positive electrode active material layer may further include an inorganic filler, an organic filler, a solid electrolyte, a surface modifier, a dispersant, a lubricant, a flame retardant, a protective agent, a flux, a coupling agent, an adsorbent, and/or the like, for example. The positive electrode active material layer may include polyoxyethylene allylphenyl ether phosphate, zeolite, a silane coupling agent, $MoS_2$, $WO_3$, and/or the like, for example.

<Positive Electrode Active Material>

The positive electrode active material may be in particle form, for example. The positive electrode active material may have a D50 from 1 to 30 $\mu$m, or from 10 to 20 $\mu$m, or from 1 to 10 $\mu$m, for example. "D50" refers to a particle size in volume-based particle size distribution at which the cumulative frequency accumulated from the small particle size side reaches 50%. D50 may be measured by laser diffraction. The sample to be measured is powder.

The positive electrode active material may include any component. The positive electrode active material may include a transition metal oxide, a polyanion compound, and/or the like, for example. In a single particle (positive electrode active material), the composition may be uniform, or may be non-uniform. For example, there may be a gradient in the composition from the surface of the particle toward the center. The composition may change contiguously, or may change non-contiguously (in steps).

<Transition Metal Oxide: Space Group R-3m>

The transition metal oxide may have any crystal structure. For example, the transition metal oxide may include a crystal structure that belongs to a space group R-3m and/or the like. For example, a compound represented by the general formula "$LiMO_2$" may have a crystal structure that belongs to a space group R-3m. The transition metal oxide may be represented by the following formula (A-1), for example.

$$Li_{1-a}Ni_xM_{1-x}O_2 \qquad (A\text{-}1)$$

In the above formula, the relationships of $-0.5 \leq a \leq 0.5$, $0 \leq x \leq 1$ are satisfied.

M may include, for example, at least one selected from the group consisting of Co, Mn, and Al.

In the above formula (A-1), x may satisfy the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x \leq 1$, for example. a may satisfy the relationship of $-0.4 \leq a \leq 0.4$, $-0.3 \leq a \leq 0.3$, $-0.2 \leq a \leq 0.2$, or $-0.1 \leq a \leq 0.1$, for example.

The transition metal oxide may include, for example, at least one selected from the group consisting of $LiCoO_2$, $LiMnO_2$, $LiNi_{0.9}Co_{0.1}O_2$, $LiNi_{0.9}Mn_{0.1}O_2$, and $LiNiO_2$.

<NCM>

The transition metal oxide may be represented by the following formula (A-2), for example. A compound represented by the following formula (A-2) may also be called "NCM".

$$Li_{1-a}Ni_xCo_yMn_zO_2 \qquad (A\text{-}2)$$

In the above formula, the relationships of $-0.5 \leq a \leq 0.5$, $0 < x < 1$, $0 < y < 1$, $0 < z < 1$, $x+y+z=1$ are satisfied.

In the above formula (A-2), x may satisfy the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x \leq 1$, for example.

In the above formula (A-2), y may satisfy the relationship of $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$, for example.

In the above formula (A-2), z may satisfy the relationship of $0 < z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$, for example.

NCM may include, for example, at least one selected from the group consisting of $LiNi_{1/3}Co_{1/3}Mn_{1/3}O_2$, $L1Ni_{0.4}Co_{0.3}Mn_{0.3}O_2$, $LiNi_{0.3}Co_{0.4}Mn_{0.3}O_2$, $LiNi_{0.3}Co_{0.3}Mn_{0.4}O_2$, $LiNi_{0.5}Co_{0.2}Mn_{0.3}O_2$, $LiNi_{0.5}Co_{0.3}Mn_{0.2}O_2$, $LiNi_{0.5}Co_{0.4}Mn_{0.1}O_2$, $LiNi_{0.5}Co_{0.1}Mn_{0.4}O_2$, $LiNi_{0.6}Co_{0.2}Mn_{0.2}O_2$, $LiNi_{0.6}Co_{0.3}Mn_{0.1}O_2$, $LiNi_{0.6}Co_{0.1}Mn_{0.3}O_2$, $LiNi_{0.7}Co_{0.1}Mn_{0.2}O_2$, $LiNi_{0.7}Co_{0.2}Mn_{0.1}O_2$, $LiNi_{0.8}Co_{0.1}Mn_{0.1}O_2$, and $LiNi_{0.9}Co_{0.05}Mn_{0.05}O_2$.

<NCA>

The transition metal oxide may be represented by the following formula (A-3), for example. A compound represented by the following formula (A-3) may also be called "NCA".

$$Li_{1-a}Ni_xCo_yAl_zO_2 \qquad (A\text{-}3)$$

In the above formula, the relationships of $-0.5 \leq a \leq 0.5$, $0 < x < 1$, $0 < y < 1$, $0 < z < 1$, $x+y+z=1$ are satisfied.

In the above formula (A-3), x may satisfy the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x \leq 1$, for example.

In the above formula (A-3), y may satisfy the relationship of $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$, for example.

In the above formula (A-3), z may satisfy the relationship of $0 < z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z \leq 1$, for example.

NCA may include, for example, at least one selected from the group consisting of $LiNi_{0.7}Co_{0.1}Al_{0.2}O_2$, $LiNi_{0.7}Co_{0.2}Al_{0.1}O_2$, $LiNi_{0.8}Co_{0.1}Al_{0.1}O_2$, $LiNi_{0.8}Co_{0.17}Al_{0.03}O_2$, $LiNi_{0.8}Co_{0.15}Al_{0.05}O_2$, and $LiNi_{0.9}Co_{0.05}Al_{0.05}O_2$.

<Multi-Component System>

The positive electrode active material may include two or more NCMs and/or the like, for example. The positive electrode active material may include NCM ($0.6 \leq x$) and NCM ($x < 0.6$), for example. "NCM ($0.6 \leq x$)" refers to a compound in which x (Ni ratio) in the above formula (A-2) is 0.6 or more. NCM ($0.6 \leq x$) may also be called "a high-nickel material", for example. NCM ($0.6 \leq x$) includes $LiNi_{0.8}Co_{0.1}Mn_{0.1}O_2$ and/or the like, for example. "NCM($x < 0.6$)" refers to a compound in which x (Ni ratio) in the above formula (A-2) is less than 0.6. NCM ($x < 0.6$) includes $LiNi_{1/3}Co_{1/3}Mn_{1/3}O_2$ and/or the like, for example. The mixing ratio (mass ratio) between NCM ($0.6 \leq x$) and NCM ($x < 0.6$) may be "NCM ($0.6 \leq x$)/NCM ($x < 0.6$)=9/1 to 1/9", or "NCM ($0.6 \leq x$)/NCM ($x < 0.6$)=9/1 to 4/6", or "NCM ($0.6 \leq x$)/NCM ($x < 0.6$)=9/1 to 3/7", for example.

The positive electrode active material may include NCA and NCM, for example. The mixing ratio (mass ratio) between NCA and NCM may be "NCA/NCM=9/1 to 1/9", "NCA/NCM=9/1 to 4/6", or "NCA/NCM=9/1 to 3/7", for example. Between NCA and NCM, the Ni ratio may be the same or may be different. The Ni ratio of NCA may be more than the Ni ratio of NCM. The Ni ratio of NCA may be less than the Ni ratio of NCM.

<Transition Metal Oxide: Space Group C2/m>

The transition metal oxide may include a crystal structure that belongs to a space group C2/m and/or the like, for example. The transition metal oxide may be represented by the following formula (A-4), for example.

$$Li_2MO_3 \qquad (A-4)$$

In the above formula, M may include, for example, at least one selected from the group consisting of Ni, Co, Mn, and Fe.

The positive electrode active material may include a mixture of $LiMO_2$ (space group R-3m) and $Li_2MO_3$ (space group C2/m), for example. The positive electrode active material may include a solid solution that is formed of $LiMO_2$ and $Li_2MO_3$ ($Li_2MO_3$-$LiMO_2$), and/or the like, for example.

<Transition Metal Oxide: Space Group Fd-3m>

The transition metal oxide may include a crystal structure that belongs to a space group Fd-3m, and/or the like, for example. The transition metal oxide may be represented by, for example, the following formula (A-5).

$$LiMn_{2-x}M_xO_4 \qquad (A-5)$$

In the above formula, the relationship of $0 \leq x \leq 2$ is satisfied.

M may include, for example, at least one selected from the group consisting of Ni, Fe, and Zn.

$LiM_2O_4$ (space group Fd-3m) may include, for example, at least one selected from the group consisting of $LiMn_2O_4$ and $LiMn_{1.5}Ni_{0.5}O_4$. The positive electrode active material may include a mixture of $LiMO_2$ (space group R-3m) and $LiM_2O_4$ (space group Fd-3m), for example. The mixing ratio (mass ratio) between $LiMO_2$ (space group R-3m) and $LiM_2O_4$ (space group Fd-3m) may be "$LiMO_2$/$LiM_2O_4$=9/1 to 9/1", or "$LiMO_2$/$LiM_2O_4$=9/1 to 5/5", or "$LiMO_2$/$LiM_2O_4$=9/1 to 7/3", for example.

<Polyanion Compound>

The polyanion compound may include a phosphoric acid salt (such as $LiFePO_4$ for example), a silicic acid salt, a boric acid salt, and/or the like, for example. The polyanion compound may be represented by the following formulae (A-6) to (A-9), for example.

$$LiMPO_4 \qquad (A-6)$$

$$Li_{2-x}MPO_4F \qquad (A-7)$$

$$Li_2MSiO_4 \qquad (A-8)$$

$$LiMBO_3 \qquad (A-9)$$

In the above formulae (A-6) to (A-9), M may include, for example, at least one selected from the group consisting of Fe, Mn, and Co. In the above formula (A-7), the relationship of $0 \leq x \leq 2$ may be satisfied, for example.

The positive electrode active material may include a mixture of $LiMO_2$ (space group R-3m) and the polyanion compound, for example. The mixing ratio (mass ratio) between $LiMO_2$ (space group R-3m) and the polyanion compound may be "$LiMO_2$/(polyanion compound) =9/1 to 9/1", or "$LiMO_2$/(polyanion compound) =9/1 to 5/5", or "$LiMO_2$/(polyanion compound) =9/1 to 7/3 ", for example.

<Dopant>

To the positive electrode active material, a dopant may be added. The dopant may be diffused throughout the entire particle, or may be locally distributed. For example, the dopant may be locally distributed on the particle surface. The dopant may be a substituted solid solution atom, or may be an intruding solid solution atom. The amount of the dopant to be added (the molar fraction relative to the total amount of the positive electrode active material) may be from 0.01 to 5%, or may be from 0.1 to 3%, or may be from 0.1 to 1%, for example. A single type of dopant may be added, or two or more types of dopant may be added. The two or more dopants may form a complex.

The dopant may include, for example, at least one selected from the group consisting of B, C, N, a halogen, Si, Na, Mg, Al, Mn, Co, Cr, Sc, Ti, V, Cu, Zn, Ga, Ge, Se, Sr, Y, Zr, Nb, Mo, In, Pb, Bi, Sb, Sn, W, La, Ce, Pr, Nd, Pm, Sm, Eu, Gd, Tb, Dy, Ho, Er, Tm, Yb, Lu, and an actinoid.

For example, to NCA, a combination of "Zr, Mg, W, Sm", a combination of "Ti, Mn, Nb, Si, Mo", or a combination of "Er, Mg" may be added.

For example, to NCM, Ti may be added. For example, to NCM, a combination of "Zr, W", a combination of "Si, W", or a combination of "Zr, W, Al, Ti, Co" may be added.

<<Negative Electrode Current Collector>>

The negative electrode current collector is electrically conductive. The negative electrode current collector may have a thickness from 5 to 50 $\mu$m, for example. The negative electrode current collector may include a metal foil and/or the like, for example. The negative electrode current collector may include at least one selected from the group consisting of Cu, Ni, Fe, Zn, Pb, Ag, and Au, for example. The negative electrode current collector may include a Cu foil, a Cu alloy foil, and/or the like, for example.

<<Negative Electrode Active Material Layer>>

The negative electrode active material layer may have a thickness from 10 to 1000 $\mu$m, or from 50 to 500 $\mu$m, or from 100 to 300 $\mu$m, for example. The negative electrode active material layer includes a negative electrode active material. The negative electrode active material layer may further include a conductive material, a binder, and the like, for example.

<Conductive Material>

The conductive material may form an electron conduction path inside the negative electrode active material layer. The content of the conductive material may be, for example, from 0.1 to 10 parts by mass relative to 100 parts by mass of the negative electrode active material. The conductive material may include any component. The conductive material may include at least one selected from the group consisting of graphite, AB, Ketjenblack, VGCFs, CNTs, and GFs, for example. The CNTs may include at least one selected from the group consisting of single-walled CNTs (SWCNTs) and multi-walled CNTs (MWCNTs).

<Binder>

The content of the binder may be, for example, from 0.1 to 10 parts by mass relative to 100 parts by mass of the negative electrode active material. The binder may include any component. The binder may include, for example, at least one selected from the group consisting of styrene-butadiene rubber (SBR), acrylate butadiene rubber (ABR), sodium alginate, carboxymethylcellulose (such as CMC-H, CMC-Na, CMC-Li, CMC-NH$_4$), polyacrylic acid (such as PAA-H, PAA-Na, PAA-Li), polyacrylonitrile (PAN), polyvinylidene difluoride (PVdF), polytetrafluoroethylene (PTFE), acrylic resin (acrylic acid ester copolymer), methacrylic resin (methacrylic acid ester copolymer), polyvinylpyrrolidone (PVP), polyvinyl alcohol (PVA), and derivatives of these. For example, the expression "CMC-Na" refers to a Na salt of CMC. For example, the expression "CMC-H" refers to an acid-type CMC. The same applies to "PAA-Na" and the like.

<Other Components>

The negative electrode active material layer may further include an inorganic filler, an organic filler, a solid electrolyte, a surface modifier, a dispersant, a lubricant, a flame retardant, a protective agent, a flux, a coupling agent, an adsorbent, and/or the like, for example. The negative electrode active material layer may include a layered silicate (such as smectite, montmorillonite, bentonite, hectorite), an inorganic filler (such as solid alumina, hollow silica, boehmite), a polysiloxane compound, and/or the like, for example.

<Negative Electrode Active Material>

The negative electrode active material may include, for example, at least one selected from the group consisting of natural graphite, artificial graphite, soft carbon, hard carbon, silicon (Si), SiO, Li silicate, Si-based alloy, tin (Sn), SnO, Sn-based alloy, and Li$_4$Ti$_5$O$_{12}$.

<Carbon-Based Active Material>

The "graphite" collectively refers to natural graphite and artificial graphite. The graphite may be a mixture of natural graphite and artificial graphite. The mixing ratio (mass ratio) may be "(natural graphite)/(artificial graphite)=1/9 to 9/1", or "(natural graphite)/(artificial graphite)=2/8 to 8/2", or "(natural graphite)/(artificial graphite)=3/7 to 7/3 ", for example.

The graphite may include a dopant. The dopant may include, for example, at least one selected from the group consisting of B, N, P, Li, and Ca. The amount to be added may be from 0.01 to 5%, or from 0.1 to 3%, or from 0.1 to 1% in molar fraction, for example.

The surface of the graphite may be covered with amorphous carbon, for example. The surface of the graphite may be covered with another type of material, for example. This another type of material may include, for example, at least one selected from the group consisting of P, W, Al, and O. The another type of material may include, for example, at least one selected from the group consisting of Al(OH)$_3$, AlOOH, Al$_2$O$_3$, WO$_3$, Li$_2$CO$_3$, LiHCO$_3$, and Li$_3$PO$_4$.

<Alloy-Based Active Material>

SiO may be represented by the following formula (B-1), for example.

$$SiO_x \qquad (B-1)$$

In the above formula, the relationship of $0<x<2$ is satisfied.

In the above formula (B-1), x may satisfy $0.5 \leq x \leq 1.5$ or $0.8 \leq x \leq 1.2$, for example.

Li silicate may include, for example, at least one selected from the group consisting of Li$_4$SiO$_4$, Li$_2$SiO$_3$, Li$_2$Si$_2$O$_5$, and Li$_8$SiO$_6$. The second negative electrode active material may include a mixture of Si and Li silicate, for example. The mixing ratio (mass ratio) may be "Si/(Li silicate)=1/9 to 9/1", or "Si/(Li silicate)=2/8 to 8/2", or "Si/(Li silicate)=3/7 to 7/3", or "Si/(Li silicate)=4/6 to 6/4", for example.

The alloy-based active material (such as Si, SiO) may include an additive. The additive may be a substituted solid solution atom or an intruding solid solution atom, for example. The additive may be an adherent adhered to the surface of the alloy-based active material. The adherent may be an elementary substance, an oxide, a carbide, a nitride, a halide, and/or the like, for example. The amount to be added may be from 0.01 to 5%, or from 0.1 to 3%, or from 0.1 to 1% in molar fraction, for example. The additive may include, for example, at least one selected from the group consisting of Li, Na, K, Rb, Be, Mg, Ca, Sr, Fe, Ba, B, Al, Ga, In, C, Ge, Sn, Pb, N, P, As, Y, Sb, and S. That is, SiO may be doped with Mg and/or Na. For example, Mg silicate and/or Na silicate may be formed. For example, boron oxide (such as B$_2$O$_3$, for example), yttrium oxide (such as Y$_2$O$_3$, for example), and/or the like may be added to SiO.

<Si-C Composite Material>

The negative electrode active material may include a composite material of the carbon-based active material (such as graphite) and the alloy-based active material (such as Si), for example. A composite material including Si and carbon may also be called "an Si-C composite material". For example, Si microparticles may be dispersed inside carbon particles. For example, Si microparticles may be dispersed inside graphite particles. For example, Li silicate particles may be covered with a carbon material (such as amorphous carbon). The Si-C composite material and graphite may be mixed together for use.

<Multi-Component System>

The negative electrode active material may include two or more components. The negative electrode active material may include the carbon-based active material (such as graphite) and the alloy-based active material (such as Si, SiO). The mixing ratio (mass ratio) of the carbon-based active material and the alloy-based active material may be "(carbon-based active material)/(alloy-based active material)=1/9 to 9/1", or "(carbon-based active material)/(alloy-based active material)=2/8 to 8/2", or "(carbon-based active material)/(alloy-based active material)=3/7 to 7/3", or "(carbon-based active material)/(alloy-based active material)=4/6 to 6/4", for example.

<Method of Producing Battery Component>

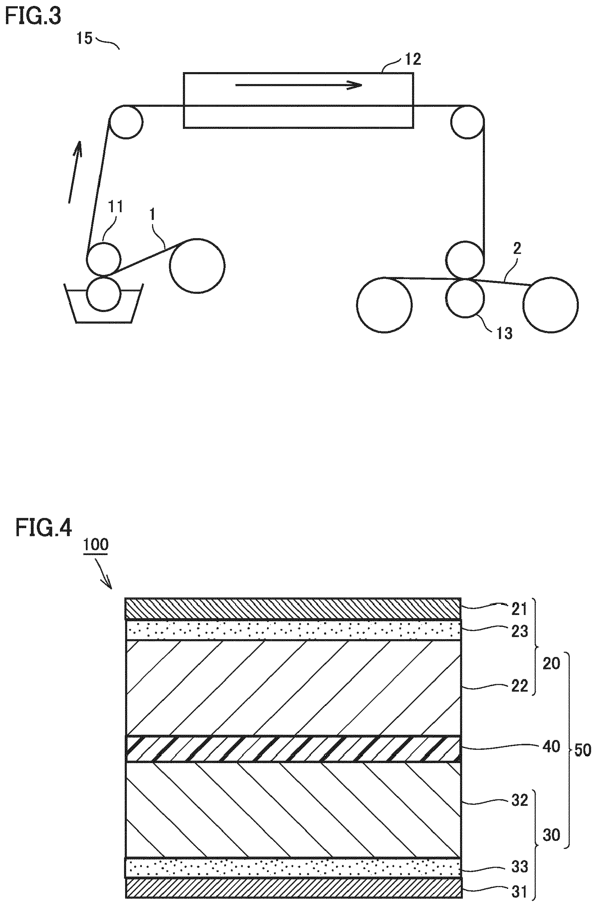

Fig. 2 is a flowchart schematically illustrating a method of producing a battery component according to the present embodiment. Fig. 3 is a conceptual view illustrating an example of a production apparatus used for producing a battery component according to the present embodiment. As illustrated in Fig. 2, the method of producing a battery component according to the present embodiment comprises at least (a) preparing a slurry, (b) applying the slurry, (c) forming an adhesive layer, and (d) placing a second component. The first component and the second component are stacked on top of one another with the adhesive layer interposed therebetween.

«(a) Preparing Slurry»

In this step, a slurry including a main agent, a curing agent, a conductive aid, porous particles, and a solvent is prepared. For example, a main agent, a curing agent, a conductive aid, porous particles, and a solvent are mixed to prepare a slurry.

«(b) Applying Slurry»

In this step, the slurry is applied to the first component. The application method is not particularly limited, and examples thereof include dip coating, spray coating, roll coating, doctor blade method, gravure coating, screen printing, and the like. As an example, in Fig. 3, a gravure roller 11 is used to apply the slurry to one side of first component 1.

«(c) Forming Adhesive Layer»

In this step, the slurry applied to the first component is dried to form an adhesive layer. The drying method is not particularly limited, and, for example, a drying furnace and/or the like may be used to dry the slurry. As an example, in Fig. 3, a hot-air drying furnace is used to dry the slurry. The drying temperature may be adjusted as appropriate. The drying temperature may be from 100 to 200°C, for example.

<<(d) Placing Second Component>>

In this step, a second component is placed on the adhesive layer. In this step, the second component is placed so that the first component, the adhesive layer, and the second component are stacked in this order. The placing method is not particularly limited, and, for example, a roll press may be used to place the second component on the adhesive layer. It is preferable to adopt heat pressing because heating enhances the adhesion between the adhesive layer and the second component. As an example, in Fig. 3, a pair of heated rollers 13 are used to place second component 2 on the adhesive layer. The pressure and temperature for the pressing may be adjusted as appropriate. The pressing pressure may be from 0.3 to 1.0 MPa, for example. The pressing temperature may be from 50 to 150°C, for example.

<<Lithium-Ion Secondary Battery>>

Fig. 4 is a conceptual view illustrating an example of a lithium-ion secondary battery according to the present embodiment. A lithium-ion secondary battery 100 includes a power generation element 50 and an electrolyte (not illustrated).

As illustrated in Fig. 4, lithium-ion secondary battery 100 according to the present embodiment preferably comprises an adhesive layer 23 interposed between a positive electrode current collector 21 and a positive electrode active material layer 22. Similarly, it preferably comprises an adhesive layer 33 between a negative electrode current collector 31 and a negative electrode active material layer 32. With this configuration, peeling-off between the current collector and the active material layer is reduced. It is preferable that at least one of a positive electrode 20 and a negative electrode 30 comprise an adhesive layer between the current collector and the active material layer, and it is more preferable that both the positive electrode 20 and the negative electrode 30 comprise an adhesive layer between the current collector and the active material layer.

<Exterior Package>

Lithium-ion secondary battery 100 may include an exterior package (not illustrated). The exterior package may accommodate power generation element 50 and the electrolyte. The exterior package may have any configuration. The exterior package may be a case made of metal, or may be a pouch made of a metal foil laminated film, for example. The case may have any shape. The case may be cylindrical, prismatic, flat, coin-shaped, and/or the like, for example. The exterior package may include Al and/or the like, for example. The exterior package may accommodate a single power generation element 50, or may accommodate a plurality of power generation elements 50, for example. The plurality of power generation elements 50 may form a series circuit, or may form a parallel circuit, for example. Inside the exterior package, the plurality of power generation elements 50 may be stacked in the thickness direction of lithium-ion secondary battery 100.

<Power Generation Element>

Power generation element 50 may also be called "an electrode group", "an electrode assembly", and the like. Power generation element 50 includes positive electrode 20 and negative electrode 30. Power generation element 50 may further include a separator 40. Separator 40 is interposed between positive electrode 20 and negative electrode 30. Power generation element 50 may have any configuration. For example, power generation element 50 may be a stack-type one. For example, positive electrode 20 and negative electrode 30 may be alternately stacked with separator 40 interposed between positive electrode 20 and negative electrode 30 to form power generation element 50. For example, power generation element 50 may be a wound-type one. For example, positive electrode 20 having a belt-like shape, separator 40 having a belt-like shape, and negative electrode 30 having a belt-like shape may be stacked to form a stack. The resulting stack may be wound spirally to form power generation element 50. After being wound, the wound power generation element 50 may be shaped into a flat form.

<Positive Electrode>

Positive electrode 20 may be in sheet form, for example. Positive electrode 20 may include positive electrode current collector 21 and positive electrode active material layer 22, for example. The details of positive electrode current collector 21 and positive electrode active material layer 22 are as described above.

<Surface Covering>

Positive electrode 20 may include a composite particle. The composite particle includes a core particle and a covering layer. The core particle includes a positive electrode active material. The covering layer covers at least part of the surface of the core particle. The covering layer may have a thickness from 1 to 3000 nm, or from 5 to 2000 nm, or from 10 to 1000 nm, or from 10 to 100 nm, or from 10 to 50 nm, for example. The thickness of the covering layer may be measured in an SEM image of a cross section of the particle, and/or the like, for example. More specifically, the composite particle is embedded in a resin material to prepare a sample. With the use of an ion milling apparatus, a cross section of the sample is exposed. For example, an ion milling apparatus with the trade name "ArBlade (registered trademark) 5000" manufactured by Hitachi High-Technologies (or a similar product) may be used. The cross section of the sample is examined by an SEM. For example, an SEM apparatus with the trade name "SU8030" manufactured by Hitachi High-Technologies (or a similar product) may be used. For each of ten composite particles, the thickness of the covering layer is measured in twenty fields of view. The arithmetic mean of a total of 200 thickness measurements is used.

The ratio of the part of the surface of the core particle covered by the covering layer is also called "a covering rate". The covering rate may be 1% or more, or 10% or more, or 30% or more, or 50% or more, or 70% or more, for example. The covering rate may be 100% or less, or 90% or less, or 80% or less, for example.

For example, the covering rate may be measured by XPS (X-ray Photoelectron Spectroscopy). For example, an XPS apparatus with the trade name "PHI X-tool" manufactured by ULVAC-PHI (or a similar product) may be used. A sample powder consisting of the composite particle is loaded in the XPS apparatus. Narrow scan analysis is carried out. The measurement data is processed with an analysis software. For example, an analysis software with the trade name "MulTiPak" manufactured by ULVAC-PHI (or a similar product) may be used. The measurement data is analyzed to detect a plurality of types of elements. From the area of each peak, the ratio of the detected element is determined. By the following equation (C-1), the covering rate is determined.

$$\theta = \{I_1 / (I_0 + I_1)\} \times 100 \qquad (C\text{-}1)$$

$\theta$: Covering rate [%]
$I_0$: Ratio of element attributable to core particle
$I_1$: Ratio of element attributable to covering layer

For example, when the core particle includes NCM, $I_0$ represents the total ratio of the elements "Ni, Co, Mn". For example, when the core particle includes NCA, $I_0$ represents the total ratio of the elements "Ni, Co, Al". For example, when the covering layer includes P and B, $I_1$ represents the total ratio of the elements "P, B".

The covering layer may include any component. The covering layer may include an elementary substance, organic matter, an inorganic acid salt, an organic acid salt, a hydroxide, an oxide, a carbide, a nitride, a sulfide, a halide, and/or the like, for example. The covering layer may include, for example, at least one selected from the group consisting of B, Al, W, Zr, Ti, Co, F, lithium compound (such as $Li_2CO_3$, $LiHCO_3$, $LiOH$, $Li_2O$, for example), tungsten oxide (such as $WO_3$, for example), titanium oxide (such as $TiO_2$, for example), zirconium oxide (such as $ZrO_2$, for example), boron oxide, boron phosphate (such as $BPO_4$, for example), aluminum oxide (such as $Al_2O_3$, for example), boehmite, aluminum hydroxide, phosphoric acid salt [such as $Li_3PO_4$, $(NH_4)_3PO_4$, $AlPO_4$, for example], boric acid salt (such as $Li_2B_4O_7$, $LiBO_3$, for example), polyacrylic acid salt (such as Li salt, Na salt, $NH_4$ salt), acetic acid salt (such as Li salt, for example), CMC (such as CMC-Na, CMC-Li, CMC-$NH_4$), $LiNbO_3$, $Li_2TiO_3$, and Li-containing halide (such as $LiAlCl_4$, $LiTiAlF_6$, $LiYBr_6$, $LiYCl_6$, for example).

<Hollow Particles, Solid Particles>

"Hollow particle" refers to a secondary particle in which, in a cross-sectional image thereof, the proportion of the area of the central cavity is 30% or more of the entire cross-sectional area of the particle. The proportion of the cavity in a hollow particle may be 40% or more, or 50% or more, or 60% or more, for example. "Solid particle" refers to a secondary particle in which, in a cross-sectional image of the particle, the proportion of the area of the central cavity is less than 30% of the entire cross-sectional area of the particle. The proportion of the cavity in a solid particle may be 20% or less, or 10% or less, or 5% or less, for example. The positive electrode active material may be hollow particles, or may be solid particles. A mixture of hollow particles and solid particles may be used. The mixing ratio (mass ratio) between hollow particles and solid particles may be "(hollow particles)/(solid particles)=1/9 to 9/1", or "(hollow particles)/(solid particles)=2/8 to 8/2", or "(hollow particles)/(solid particles)=3/7 to 7/3", or "(hollow particles)/(solid particles)=4/6 to 6/4", for example.

<Large Particles/Small Particles>

"Electrode active material" collectively refers to a positive electrode active material and a negative electrode active material. The electrode active material may have a unimodal particle size distribution (based on the number), for example. The electrode active material may have a multimodal particle size distribution, for example. The electrode active material may have a bimodal particle size distribution, for example. That is, the electrode active material may include large particles and small particles. When the particle size distribution is bimodal, the particle size corresponding to the peak top of the larger particle size is regarded as the particle size of the large particles ($d_L$). The particle size corresponding to the peak top of the smaller particle size is regarded as the particle size of the small particles (ds). The particle size ratio ($d_L/d_S$) may be from 2 to 10, or from 2 to 5, or from 2 to 4, for example. $d_L$ may be from 8 to 20 $\mu$m, or from 8 to 15 $\mu$m, for example. $d_S$ may be from 1 to 10 $\mu$m, or from 1 to 5 $\mu$m, for example.

For example, with the use of a waveform analysis software, peak separating processing may be carried out for the particle size distribution. The ratio between the peak area of the large particles ($S_L$) and the peak area of the small particles (Ss) may be "$S_L/S_S$=1/9 to 9/1", or "$S_L/S_S$=5/5 to 9/1", or "$S_L/S_S$=7/3 to 9/1", for example.

The number-based particle size distribution is measured by a microscope method. From the electrode active material layer, a plurality of cross-sectional samples are taken. The cross-sectional sample may include a cross section vertical to the surface of the electrode active material layer, for example. By ion milling and/or the like, for example, cleaning is carried out to the side that is to be observed. By SEM, the cross-sectional sample is examined. The magnification for the examination is adjusted in such a way that 10 to 100 particles are contained within the examination field of view. The Feret diameters of all the particles in the image are measured. "Feret diameter" refers to the distance between two points located farthest apart from each other on the outline of the particle. The plurality of the cross-sectional samples are examined to obtain a total of 1000 or more Feret diameters. From the 1000 or more Feret diameters, number-based particle size distribution is created.

The bimodal particle size distribution may be formed by two types of particles mixed together. These two types of particles have different particle size distributions. For example, the two types of particles may have different D50. For example, the large particles may have a D50 from 8 to 20 $\mu$m, or from 8 to 15 $\mu$m. For example, the small particles may have a D50 from 1 to 10 $\mu$m, or from 1 to 5 $\mu$m. The ratio of the D50 of the large particles to the D50 of the small particles may be from 2 to 10, or from 2 to 5, or from 2 to 4, for example. The mixing ratio (mass ratio) between the large particles and the small particles may be "(large particles)/(small particles)=1/9 to 9/1", or "(large particles)/(small particles)=5/5 to 9/1", or "(large particles)/(small particles)=7/3 to 9/1", for example.

The large particles and the small particles may have the same composition, or may have different compositions. For example, the large particles may be NCA and the small particles may be NCM. For example, the large particles may be NCM ($0.6 \leq x$) and the small particles may be NCM ($x < 0.6$).

<Negative Electrode>

Negative electrode 30 may be in sheet form, for example. Negative electrode 30 may include negative electrode current collector 31 and negative electrode active material layer 32, for example. The details of negative electrode current collector 31 and negative electrode active material layer 32 are as described above.

<Separator>

Separator 40 is capable of separating positive electrode 20 from negative electrode 30. Separator 40 is electrically insulating. Separator 40 may include, for example, at least one selected from the group consisting of a resin film, an inorganic particle layer, and an organic particle layer. Separator 40 may include a resin film and an inorganic particle layer, for example.

<<Resin Film>>

The resin film is porous. The resin film may include a microporous film, a nonwoven fabric, and/or the like, for example. The resin film includes a resin skeleton. The resin skeleton may be contiguous in mesh form, for example. Gaps in the resin skeleton form pores. The resin film allows the electrolyte to permeate therethrough. The resin film may have an average pore size of 1 $\mu$m or less, for example. The resin film may have an average pore size from 0.01 to 1 $\mu$m, or from 0.1 to 0.5 $\mu$m, for example. The "average pore size" may be measured by mercury porosimetry. The resin film may have a Gurley value from 50 to 250 s/100cm$^3$, for example. "Gurley value" may be measured by a Gurley test method.

The resin film may include, for example, at least one selected from the group consisting of an olefin-based resin, a polyurethane-based resin, a polyamide-based resin, a cellulose-based resin, a polyether-based resin, an acrylic-based resin, a polyester-based resin, and the like. The resin film may include, for example, at least one selected from the group consisting of polyethylene (PE), polypropylene (PP), polyamide (PA), polyamide-imide (PAI), polyimide (PI), aromatic polyamide (aramid), and polyphenylene ether (PPE), and derivatives of these. The resin film may be formed by stretching, phase separation, and/or the like, for example. The resin film may have a thickness from 5 to 50 $\mu$m, or from 10 to 25 $\mu$m, for example.

The resin film may have a monolayer structure. The resin film may consist of a PE layer, for example. A skeleton of a PE layer is formed of PE. The PE layer may have shut-down function. The resin film may have a multilayer structure, for example. The resin film may include a PP layer and a PE layer, for example. A skeleton of a PP layer is formed of PP. The resin film may have a three-layer structure, for example. The resin film may be formed by stacking a PP layer, a PE layer, and a PP layer in this order, for example. The thickness of the PE layer may be from 5 to 20 $\mu$m, for example. The thickness of the PP layer may be from 3 to 10 $\mu$m, for example.

<<Inorganic Particle Layer>>

The inorganic particle layer may be formed on the surface of the resin film. The inorganic particle layer may be formed on only one side of the resin film, or may be formed on both sides of the resin film. The inorganic particle layer may be formed on the side facing positive electrode 20, or may be formed on the side facing negative electrode 30. The inorganic particle layer may be formed on the surface of positive electrode 20, or may be formed on the surface of negative electrode 30.

The inorganic particle layer is porous. The inorganic particle layer includes inorganic particles. The inorganic particles may also be called "an inorganic filler". Gaps between the inorganic particles form pores. The inorganic particle layer may have a thickness from 0.5 to 10 $\mu$m, or from 1 to 5 $\mu$m, for example. The inorganic particles may include a heat-resistant material, for example. The inorganic particle layer that includes a heat-resistant material is also called "HRL (Heat Resistance Layer)". The inorganic particles may include at least one selected from the group consisting of boehmite, alumina, zirconia, titania, magnesia, silica, and the like. The inorganic particles may have any shape. The inorganic particles may be spherical, rod-like, plate-like, fibrous, and/or the like, for example. The inorganic particles may have a D50 from 0.1 to 10 $\mu$m, or from 0.5 to 3 $\mu$m, for example. The inorganic particle layer may further include a binder. The binder may include, for example, at least one selected from the group consisting of an acrylic-based resin, a polyamide-based resin, a fluorine-based resin, an aromatic-polyether-based resin, and a liquid-crystal-polyester-based resin, and the like.

<<Organic Particle Layer>>

Separator 40 may include an organic particle layer, for example. Separator 40 may include an organic particle layer instead of the resin film, for example. Separator 40 may include an organic particle layer instead of the inorganic particle layer, for example. Separator 40 may include both the resin film and an organic particle layer. Separator 40 may include both the inorganic particle layer and an organic particle layer. Separator 40 may include the resin film, the inorganic particle layer, and an organic particle layer.

The organic particle layer may have a thickness from 0.1 to 50 $\mu$m, or from 0.5 to 20 $\mu$m, or from 0.5 to 10 $\mu$m, or from 1 to 5 $\mu$m, for example. The organic particle layer includes organic particles. The organic particles may also be called "an organic filler". The organic particles may include a heat-resistant material. The organic particles may include, for example, at least one selected from the group consisting of PE, PP, PTFE, PI, PAI, PA, aramid, and the like. The organic particles may be spherical, rod-like, plate-like, fibrous, and/or the like, for example. The organic particles may have a D50 from 0.1 to 10 $\mu$m, or from 0.5 to 3 $\mu$m, for example.

Separator 40 may include a mixed layer, for example. The mixed layer includes both inorganic particles and organic particles.

<Electrolyte>

The electrolyte dissolves Li ions in it. The electrolyte may be a liquid electrolyte, or may be a gelled electrolyte. The liquid electrolyte may include an electrolyte solution, for example. The electrolyte solution includes a solvent and a solute.

<<Solvent>>

<Ether-Based Solvent>

The electrolyte solution may include an ether-based solvent and/or the like, for example. The solvent may include hydrofluoroether (HFE) and/or the like, for example. HFE may include, for example, at least one selected from the group consisting of a difluoromethyl group, a 2,2-difluoroethyl group, a 2,2,2-trifluoroethyl group, a 1,1,2,2-tetrafluoroethyl group, a 2,2,3,3,3-pentafluoropropyl group, a 2,2,3,3-tetrafluoropropyl group, a 1,1,1,3,3,3-hexafluoroisopropyl group, a 1,1,2,3,3,3-hexafluoropropyl group, a 2,2,3,3,4,4,4-heptafluorobutyl group, a 2,2,3,3,4,4-hexafluorobutyl group, and a 2,2,3,3,4,4,5,5-octafluoropentyl group.

The solvent may also include an ether other than HFE (the ether may also be called "a second ether" hereinafter). The second ether may include, for example, at least one selected from the group consisting of tetrahydrofuran (THF), 1,4-dioxane (DOX), 1,3-dioxolane (DOL), 1,2-dimethoxyethane (DME), 1,2-diethoxyethane (DEE), ethylglyme, triglyme, tetraglyme, and derivatives of these. For example, the solvent may include the second ether (such as DME) in a volume fraction from 1 to 50%, with the remainder being made up of HFE. For example, the solvent may include the second ether in a volume fraction from 10 to 40%, with the remainder being made up of HFE.

<Carbonate-Based Solvent>

The electrolyte solution may include a carbonate-based solvent (a carbonate-ester-based solvent), for example. The solvent may include a cyclic carbonate, a chain carbonate, a fluorinated carbonate, and/or the like, for example. The solvent may include, for example, at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives of these.

The solvent may include a cyclic carbonate (such as EC, PC, FEC) and a chain carbonate (such as EMC, DMC, DEC). The mixing ratio between the cyclic carbonate and the chain carbonate (volume ratio) may be "(cyclic carbonate)/(chain carbonate)=1/9 to 4/6", or "(cyclic carbonate)/(chain carbonate)=2/8 to 3/7", or "(cyclic carbonate)/(chain carbonate)=3/7 to 4/6", for example.

The solvent may include a cyclic carbonate (such as EC, PC) and a fluorinated cyclic carbonate (such as FEC). The mixing ratio between the cyclic carbonate and the fluorinated cyclic carbonate (volume ratio) may be "(cyclic carbonate)/(fluorinated cyclic carbonate)=99/1 to 90/10", or "(cyclic carbonate)/(fluorinated cyclic carbonate)=9/1 to 1/9", or "(cyclic carbonate)/(fluorinated cyclic carbonate)=9/1 to 7/3", or "(cyclic carbonate)/(fluorinated cyclic carbonate)=3/7 to 1/9", for example.

The solvent may include EC, FEC, EMC, DMC, and DEC, for example. The volume ratio of these components may satisfy the relationship represented by the following equation (D-1), for example.

$$V_{EC}+V_{FEC}+V_{EMC}+V_{DMC}+V_{DEC}=10 \qquad (D\text{-}1)$$

In the above equation, each of $V_{EC}$, $V_{FEC}$, $V_{EMC}$, $V_{DMC}$, and $V_{DEC}$ represents the volume ratio of EC, FEC, EMC, DMC, and DEC, respectively.

The following relationships are satisfied: $1 \leq V_{EC} \leq 4$, $0 \leq V_{FEC} \leq 3$, $V_{EC}+V_{FEC} \leq 4$, $0 \leq V_{EMC} \leq 9$, $0 \leq V_{DMC} \leq 9$, $0 \leq V_{DEC} \leq 9$, $6 \leq V_{EMC}+V_{DMC}+V_{DEC} \leq 9$.

In the above formula (D-1), the relationship of $1 \leq V_{EC} \leq 2$ or $2 \leq V_{EC} \leq 3$ may be satisfied, for example.

The relationship of $1 \leq V_{FEC} \leq 2$ or $2 \leq V_{FEC} \leq 4$ may be satisfied, for example.

The relationship of $3 \leq V_{EMC} \leq 4$ or $6 \leq V_{EMC} \leq 8$ may be satisfied, for example.

The relationship of $3 \leq V_{DMC} \leq 4$ or $6 \leq V_{DMC} \leq 8$ may be satisfied, for example.

The relationship of $3 \leq V_{DEC} \leq 4$ or $6 \leq V_{DEC} \leq 8$ may be satisfied, for example.

The solvent may have a composition of "EC/EMC=3/7", "EC/DMC=3/7", "EC/FEC/DEC=1/2/7", "EC/DMC/EMC=3/4/3", "EC/DMC/EMC=3/3/4", "EC/FEC/DMC/EMC=2/1/4/3", "EC/FEC/DMC/EMC=1/2/4/3", "EC/FEC/DMC/EMC=2/1/3/4", "EC/FEC/DMC/EMC=1/2/3/4" (volume ratio), and/or the like, for example.

<Additive>

The electrolyte solution may include any additive. The amount to be added (the mass fraction to the total amount of the electrolyte solution) may be from 0.01 to 5%, or from 0.05 to 3%, or from 0.1 to 1%, for example. The additive may include an SEI (Solid Electrolyte Interphase) formation promoter, an SEI formation inhibitor, a gas generation agent, an overcharging inhibitor, a flame retardant, an antioxidant, an electrode-protecting agent, a surfactant, and/or the like, for example.

The additive may include, for example, at least one selected from the group consisting of vinylene carbonate (VC), vinylethylene carbonate (VEC), 1,3-propane sultone (PS), tert-amylbenzene, 1,4-di-tert-butylbenzene, biphenyl (BP), cyclohexylbenzene (CHB), ethylene sulfite (ES), propane sultone (PS), ethylene sulfate (DTD), γ-butyrolactone, phosphazene compound, carboxylate ester [such as methyl formate (MF), methyl acetate (MA), methyl propionate (MP), diethyl malonate (DEM), for example], fluorobenzene (such as monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, hexafluorobenzene, for example), fluorotoluene (such as 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, octafluorotoluene, for example), benzotrifluoride (such as benzotrifluoride, 2-fluorobenzotrifluoride, 3-fluorobenzotrifluoride, 4-fluorobenzotrifluoride, 2-methylbenzotrifluoride, 3-methylbenzotrifluoride, 4-methylbenzotrifluoride, for example), fluoroxylene (such as 3-fluoro-o-xylene, 4-fluoro-o-xylene, 2-fluoro-m-xylene, 5-fluoro-m-xylene, for example), sulfur-containing heterocyclic compound (such as benzothiazole, 2-methylbenzothiazole, tetrathiafulvalene, for example), nitrile compound (such as adiponitrile, succinonitrile, for example), phosphate (such as trimethyl phosphate, triethyl phosphate, for example), carboxylic anhydride (such as acetic anhydride, propionic anhydride, oxalic anhydride, succinic anhydride, maleic anhydride, phthalic anhydride, benzoic anhydride, for example), alcohol (such as methanol, ethanol, n-propyl alcohol, ethylene glycol, diethylene glycol monomethyl ether, for example), and derivatives of these.

The components described above as the solute and the solvent may be used as a trace component (an additive). The additive may include, for example, at least one selected from the group consisting of $LiBF_4$, LiFSI, LiTFSI, LiBOB, LiDFOB, LiDFOP, $LiPO_2F_2$, $FSO_3Li$, LiI, LiBr, HFE, DOX, PC, FEC, and derivatives of these.

<<Ionic Liquid>>

The liquid electrolyte may include an ionic liquid. The liquid electrolyte may include, for example, at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives of these.

«Gelled Electrolyte»

The gelled electrolyte may include a liquid electrolyte and a polymer material. The polymer material may form a polymer matrix. The polymer material may include, for example, at least one selected from the group consisting of PVdF, PVdF-HFP, PAN, PVdF-PAN, polyethylene oxide (PEO), polyethylene glycol (PEG), and derivatives of these.

<Battery Configuration>

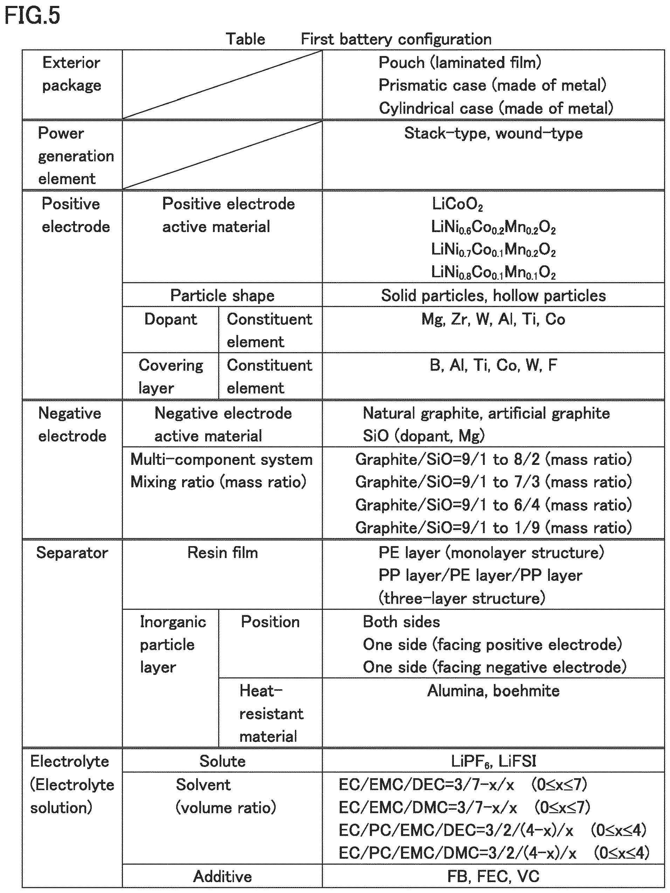

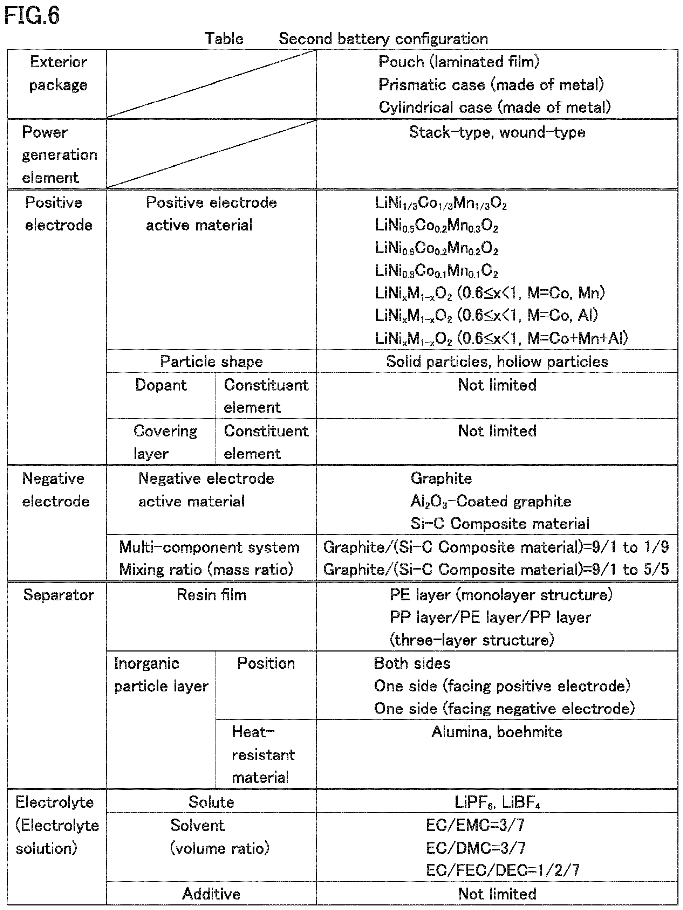

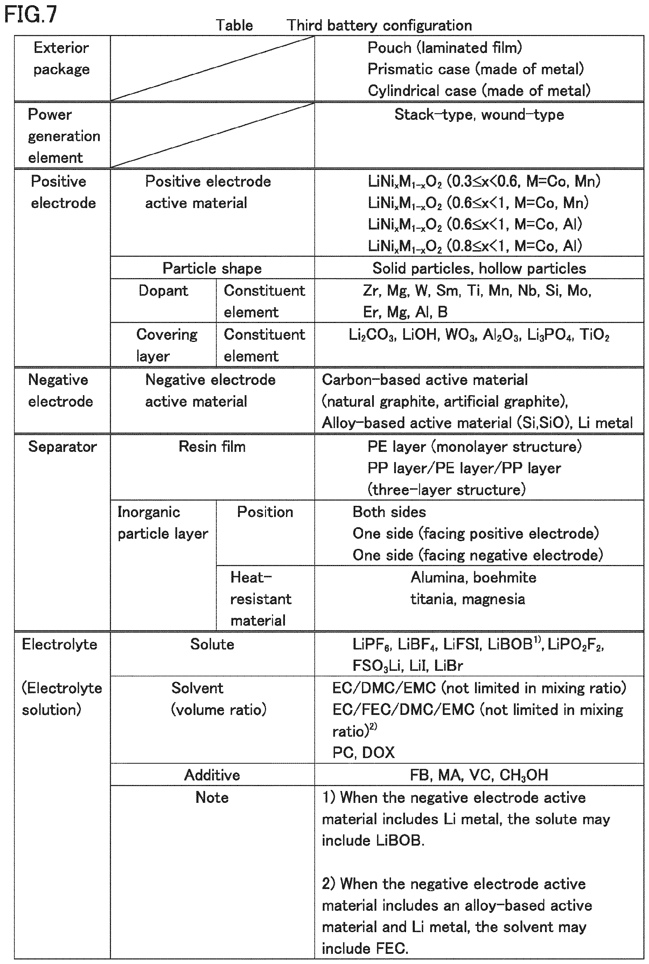

Fig. 5 is a table showing a first battery configuration. Fig. 6 is a table showing a second battery configuration. Fig. 7 is a table showing a third battery configuration. In each table, when a plurality of materials are described in a single cell, this description is intended to mean one of them as well as a combination of them. For example, when materials "$\alpha, \beta, \gamma$" are described in a single cell, this description is intended to mean "at least one selected from the group consisting of $\alpha, \beta$, and $\gamma$". Certain elements may be extracted from the first to third cell configurations and optionally combined together.

The present embodiment may be incorporated into the first to third battery configurations, for example. The positive electrode in the first battery configuration may be replaced by the positive electrode (positive electrode current collector 21, positive electrode active material layer 22) according to the present embodiment. For example, combining the first to third battery configurations with the present embodiment may improve battery performance.

«Bipolar Battery»

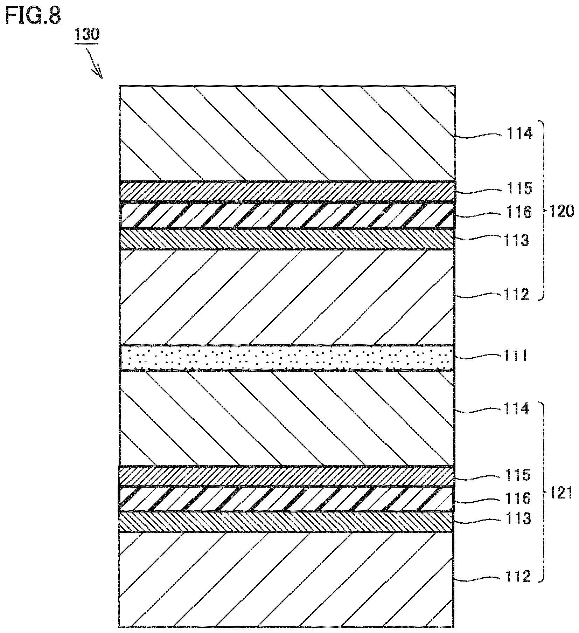

Fig. 8 is a conceptual view illustrating an example of a bipolar battery according to the present embodiment. A bipolar battery 130 includes power generation elements 120, 121 and an electrolyte (not illustrated). Description that overlaps the description of the above-described lithium-ion secondary battery may be omitted.

Each of power generation elements 120, 121 includes a positive electrode current collector 112, a positive electrode active material layer 113, a separator 116, a negative electrode active material layer 115, and a negative electrode current collector 114 in this order in a thickness direction. In a pair of power generation elements 120, 121, an adhesive layer 111 is interposed between positive electrode current collector 112 of power generation element 120 and negative electrode current collector 114 of power generation element 121. With this configuration, peeling-off between the power generation elements is reduced.

[Examples]

In the following, the present embodiment will be described using Examples, but the present embodiment is not limited to these Examples.

<Production of Battery Component>

(Example 1)

The materials described below were prepared.

First component: Al foil (thickness, 50 $\mu$m)
Second component: Cu foil (thickness, 8.0 $\mu$m)

Main agent: ARON MELT PPET Series (manufactured by Toagosei Co., Ltd.)
Curing agent: ARON MIGHTY PU Series (manufactured by Toagosei Co., Ltd.)
Conductive material: Ni-plated particles
Porous particles: zeolite
Solvent: methylcyclohexane, methyl ethyl ketone

150 parts by mass of the main agent, 15 parts by mass of the curing agent, 0.8 parts by mass of the Ni-plated particles, 180 parts by mass of zeolite, and 850 parts by mass of the solvent were mixed to form a slurry.

Then, the apparatus illustrated in Fig. 3 was used to bond the Al foil to the Cu foil with an adhesive layer interposed therebetween. More specifically, the Al foil was loaded to an application apparatus equipped with two gravure rollers, and the slurry was applied to the Al foil. The slurry thus applied to the Al foil was dried in a drying furnace to form an adhesive layer. Subsequently, the Cu foil was placed on the side of the adhesive layer opposite to the Al-foil-bonded side, and pressing was carried out with two heated rollers to produce a battery component which comprised the Al foil, the adhesive layer, and the Cu foil stacked in this order. Conditions of the apparatus illustrated in Fig. 3 are described below. It should be noted that the adhesive layer was formed in contact with the entirety of a side of the Al foil facing the adhesive layer and a side of the Cu foil facing adhesive layer.

[Conditions]

Rate: 15 m/min
Gravure rollers: Elongated, 75°
Temperature of drying furnace: 150°C
Temperature of heated rollers: 95°C
Pressure of heated rollers: 0.45 MPa

(Comparative Example 1)

A battery component was produced in the same manner as in Example 1 except that zeolite was not used.

<Evaluation>

(Air Bubbles)

The battery components of Example 1 and Comparative Example 1 were placed on a hot plate and heated at 110°C for 10 minutes. Subsequently, the surface of the Cu foil of the battery components of Example 1 and Comparative Example 1 was subjected to visual examination for air bubbles.

(Peel Strength)

The battery components of Example 1 and Comparative Example 1 were subjected to 180-degree peeling testing. More specifically, a portion of 15-mm width was cut out from each battery component in such a manner that an end thereof was not applied with the adhesive agent (an adhesive-agent-free part), and the Al foil and the Cu foil of the adhesive-agent-free part were grabbed with an autograph (manufactured by Shimadzu Corporation) for measurement. The strain rate was 150 mm/min, and the strength measured at the time when the stress in the testing profile reached constant was regarded as peel strength.

<Results>

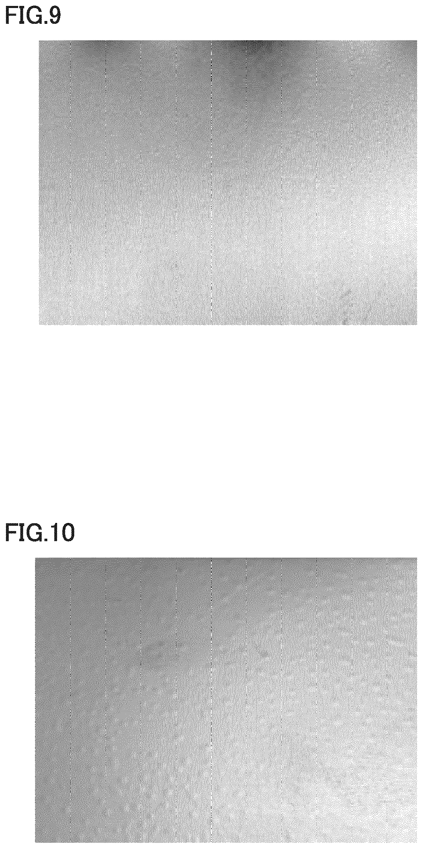

Fig. 9 is a photograph showing the appearance of the battery component of Example 1 after heating, and Fig. 10 is a photograph showing the appearance of the battery component of Comparative Example 1 after heating. In Example 1, no air bubbles were observed on the surface. In Comparative Example 1, many air bubbles were visible on the surface.

With the peel strength of Example 1 measured by 180-degree peeling testing defined as 1, the relative peel strength of Comparative Example 1 was 0.81.

Hence, formation of air bubbles was reduced when porous particles were included in the adhesive layer. Also, peeling-off of the battery components was reduced as well when porous particles were included in the adhesive layer.

Although the embodiments of the present disclosure have been described, the embodiments disclosed herein are illustrative and non-restrictive in any respect. The scope of the present disclosure is defined by the terms of the claims, and is intended to encompass any modifications within the meaning and the scope equivalent to the terms of the claims.

## Claims

1. A battery component (10) comprising:

   a first component (1);
   an adhesive layer (3); and
   a second component (2), in this order, wherein
   the adhesive layer (3) includes an adhesive agent (4), a conductive aid (5), and porous particles (6), and
   the adhesive agent (4) includes a main agent and a curing agent.

2. The battery component (10) according to claim 1, wherein the main agent is a resin having a carboxyl group, and the curing agent is a resin having an isocyanate group or an amino group.

3. The battery component (10) according to claim 1 or 2, wherein the battery component (10) includes the curing agent in an amount from 5.0 parts by mass to 10 parts by mass, the conductive aid (5) in an amount from 0.1 parts by mass to 1.0 part by mass, and the porous particles (6) in an amount from 90 parts by mass to 200 parts by mass, relative to 100 parts by mass of the main agent.

4. The battery component (10) according to any one of claims 1 to 3, wherein each of the first component (1) and the second component (2) is a current collector.

5. A bipolar battery (130) comprising the battery component (10) according to claim 4.

6. A method of producing a battery component (10), comprising:

   preparing a slurry by mixing a main agent, a curing agent, a conductive aid (5), porous particles (6), and a solvent;
   applying the slurry to a first component (1);
   forming an adhesive layer (3) by drying the slurry applied to the first component (1); and
   placing a second component (2) on the adhesive layer (3), wherein
   the first component (1) and the second component (2) are stacked on top of one another with the adhesive layer (3) interposed therebetween.

FIG.1

10

FIG.2

FIG.3

FIG.4

# FIG.5

Table     First battery configuration

| | | |
|---|---|---|
| Exterior package | | Pouch (laminated film)<br>Prismatic case (made of metal)<br>Cylindrical case (made of metal) |
| Power generation element | | Stack-type, wound-type |
| Positive electrode | Positive electrode active material | $LiCoO_2$<br>$LiNi_{0.6}Co_{0.2}Mn_{0.2}O_2$<br>$LiNi_{0.7}Co_{0.1}Mn_{0.2}O_2$<br>$LiNi_{0.8}Co_{0.1}Mn_{0.1}O_2$ |
| | Particle shape | Solid particles, hollow particles |
| | Dopant — Constituent element | Mg, Zr, W, Al, Ti, Co |
| | Covering layer — Constituent element | B, Al, Ti, Co, W, F |
| Negative electrode | Negative electrode active material | Natural graphite, artificial graphite<br>SiO (dopant, Mg) |
| | Multi-component system Mixing ratio (mass ratio) | Graphite/SiO=9/1 to 8/2 (mass ratio)<br>Graphite/SiO=9/1 to 7/3 (mass ratio)<br>Graphite/SiO=9/1 to 6/4 (mass ratio)<br>Graphite/SiO=9/1 to 1/9 (mass ratio) |
| Separator | Resin film | PE layer (monolayer structure)<br>PP layer/PE layer/PP layer<br>(three-layer structure) |
| | Inorganic particle layer — Position | Both sides<br>One side (facing positive electrode)<br>One side (facing negative electrode) |
| | Heat-resistant material | Alumina, boehmite |
| Electrolyte (Electrolyte solution) | Solute | $LiPF_6$, LiFSI |
| | Solvent (volume ratio) | EC/EMC/DEC=3/7-x/x  $(0{\leq}x{\leq}7)$<br>EC/EMC/DMC=3/7-x/x  $(0{\leq}x{\leq}7)$<br>EC/PC/EMC/DEC=3/2/(4-x)/x  $(0{\leq}x{\leq}4)$<br>EC/PC/EMC/DMC=3/2/(4-x)/x  $(0{\leq}x{\leq}4)$ |
| | Additive | FB, FEC, VC |

## FIG.6

Table    Second battery configuration

| | | |
|---|---|---|
| Exterior package | | Pouch (laminated film) Prismatic case (made of metal) Cylindrical case (made of metal) |
| Power generation element | | Stack-type, wound-type |
| Positive electrode | Positive electrode active material | $LiNi_{1/3}Co_{1/3}Mn_{1/3}O_2$ $LiNi_{0.5}Co_{0.2}Mn_{0.3}O_2$ $LiNi_{0.6}Co_{0.2}Mn_{0.2}O_2$ $LiNi_{0.8}Co_{0.1}Mn_{0.1}O_2$ $LiNi_xM_{1-x}O_2$ ($0.6 \leq x < 1$, M=Co, Mn) $LiNi_xM_{1-x}O_2$ ($0.6 \leq x < 1$, M=Co, Al) $LiNi_xM_{1-x}O_2$ ($0.6 \leq x < 1$, M=Co+Mn+Al) |
| | Particle shape | Solid particles, hollow particles |
| | Dopant — Constituent element | Not limited |
| | Covering layer — Constituent element | Not limited |
| Negative electrode | Negative electrode active material | Graphite $Al_2O_3$-Coated graphite Si-C Composite material |
| | Multi-component system Mixing ratio (mass ratio) | Graphite/(Si-C Composite material)=9/1 to 1/9 Graphite/(Si-C Composite material)=9/1 to 5/5 |
| Separator | Resin film | PE layer (monolayer structure) PP layer/PE layer/PP layer (three-layer structure) |
| | Inorganic particle layer — Position | Both sides One side (facing positive electrode) One side (facing negative electrode) |
| | Heat-resistant material | Alumina, boehmite |
| Electrolyte (Electrolyte solution) | Solute | $LiPF_6$, $LiBF_4$ |
| | Solvent (volume ratio) | EC/EMC=3/7 EC/DMC=3/7 EC/FEC/DEC=1/2/7 |
| | Additive | Not limited |

# FIG.7

Table    Third battery configuration

| | | | |
|---|---|---|---|
| Exterior package | | | Pouch (laminated film) <br> Prismatic case (made of metal) <br> Cylindrical case (made of metal) |
| Power generation element | | | Stack-type, wound-type |
| Positive electrode | Positive electrode active material | | $LiNi_xM_{1-x}O_2$ (0.3≤x<0.6, M=Co, Mn) <br> $LiNi_xM_{1-x}O_2$ (0.6≤x<1, M=Co, Mn) <br> $LiNi_xM_{1-x}O_2$ (0.6≤x<1, M=Co, Al) <br> $LiNi_xM_{1-x}O_2$ (0.8≤x<1, M=Co, Al) |
| | Particle shape | | Solid particles, hollow particles |
| | Dopant | Constituent element | Zr, Mg, W, Sm, Ti, Mn, Nb, Si, Mo, Er, Mg, Al, B |
| | Covering layer | Constituent element | $Li_2CO_3$, LiOH, $WO_3$, $Al_2O_3$, $Li_3PO_4$, $TiO_2$ |
| Negative electrode | Negative electrode active material | | Carbon-based active material <br> (natural graphite, artificial graphite), <br> Alloy-based active material (Si,SiO), Li metal |
| Separator | Resin film | | PE layer (monolayer structure) <br> PP layer/PE layer/PP layer <br> (three-layer structure) |
| | Inorganic particle layer | Position | Both sides <br> One side (facing positive electrode) <br> One side (facing negative electrode) |
| | | Heat-resistant material | Alumina, boehmite <br> titania, magnesia |
| Electrolyte <br><br> (Electrolyte solution) | Solute | | $LiPF_6$, $LiBF_4$, LiFSI, $LiBOB^{1)}$, $LiPO_2F_2$, <br> $FSO_3Li$, LiI, LiBr |
| | Solvent (volume ratio) | | EC/DMC/EMC (not limited in mixing ratio) <br> EC/FEC/DMC/EMC (not limited in mixing ratio)$^{2)}$ <br> PC, DOX |
| | Additive | | FB, MA, VC, $CH_3OH$ |
| | Note | | 1) When the negative electrode active material includes Li metal, the solute may include LiBOB. <br><br> 2) When the negative electrode active material includes an alloy-based active material and Li metal, the solvent may include FEC. |

FIG.8

FIG.9

FIG.10

Europäisches
Patentamt

European
Patent Office

Office européen
des brevets

# EUROPEAN SEARCH REPORT

**Application Number**

EP 23 21 8585

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/318555 A1 (OKU SATOSHI [JP] ET AL) 5 November 2015 (2015-11-05) * page 3, paragraph 0060 - page 44, paragraph 0521; figures 2,3; table 1 * | 1-6 | INV.<br>H01M4/04<br>H01M4/66<br>H01M10/04<br>H01M10/0585 |
| X | US 2013/295432 A1 (INOUE SHINICHI [JP]) 7 November 2013 (2013-11-07) * page 3, paragraph 0056 - page 13, paragraph 0287; figures 1a-7; tables 1,2 * | 1-6 | H01M50/46<br><br>ADD.<br>H01M10/052 |
| X | US 2020/052303 A1 (TAKAHASHI TAKAHIRO [JP] ET AL) 13 February 2020 (2020-02-13) * page 1, paragraph 0015 - page 8, paragraph 0097; figures 1-3; table 1 * | 1-6 | H01M4/02 |

**TECHNICAL FIELDS SEARCHED (IPC)**

H01M

The present search report has been drawn up for all claims

| Place of search | Date of completion of the search | Examiner |
|---|---|---|
| Munich | 17 May 2024 | Polisski, Sergej |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.........................................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 21 8585

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2024

| Patent document cited in search report | Publication date | Patent family member(s) | Publication date |
|---|---|---|---|
| US 2015318555 A1 | 05-11-2015 | CN 104604003 A | 06-05-2015 |
| | | EP 2892097 A1 | 08-07-2015 |
| | | JP 6079782 B2 | 15-02-2017 |
| | | JP WO2014034758 A1 | 08-08-2016 |
| | | KR 20150048707 A | 07-05-2015 |
| | | TW 201415701 A | 16-04-2014 |
| | | US 2015318555 A1 | 05-11-2015 |
| | | WO 2014034758 A1 | 06-03-2014 |
| US 2013295432 A1 | 07-11-2013 | CN 103390753 A | 13-11-2013 |
| | | JP 6125265 B2 | 10-05-2017 |
| | | JP 2013254727 A | 19-12-2013 |
| | | KR 20130124901 A | 15-11-2013 |
| | | TW 201347281 A | 16-11-2013 |
| | | US 2013295432 A1 | 07-11-2013 |
| US 2020052303 A1 | 13-02-2020 | CN 110546786 A | 06-12-2019 |
| | | JP 7117643 B2 | 15-08-2022 |
| | | JP WO2018198689 A1 | 12-03-2020 |
| | | US 2020052303 A1 | 13-02-2020 |
| | | WO 2018198689 A1 | 01-11-2018 |

EPO FORM P0459

For more details about this annex : see Official Journal of the European Patent Office, No. 12/82

**REFERENCES CITED IN THE DESCRIPTION**

**Patent documents cited in the description**

- JP 2023002286 A

- JP 2019034466 A